# EUROPEAN PATENT APPLICATION

(11) **EP 3 808 174 A1**
(43) Date of publication of application: **21.04.2021**
(21) Application number: 19840458.4
(22) Date of filing: 26.07.2019
(51) Int. Cl.: A01K 7/02

(54) **PET WATERING DEVICE AND ANTI-BLOCKING WATER PUMP FOR PET WATERING DEVICE**

(30) Priority: 26.07.2018 CN 201821194685 U; 26.07.2018 CN 201810835612; 15.03.2019 CN 201920337875 U
(71) Applicant: Beijing Kitten & Puppy Technology Co., Ltd., Beijing 100085 (CN)
(72) Inventor: WU, Jin, Beijing 100085 (CN); JI, Dongkai, Beijing 100085 (CN)
(74) Representative: Vesterinen, Jussi Tapio
(86) International application number: PCT/CN2019/097995
(87) International publication number: WO 2020/020369

(57) **Abstract**

Disclosed are a pet water dispenser and an anti-blocking water pump for a pet water dispenser. The pet water dispenser includes a water storage tank (1), a drinking tray (2), and a water pump (5), where an upper end of the water storage tank (1) is provided with an opening, the water storage tank (1) is further provided with a first supporting structure (101); the drinking tray (2) covers an opening of the water storage tank (1) and is supported by the first supporting structure (101), and the drinking tray (2) is provided with a water inlet (3) and a water outlet (4); the water pump (5) is arranged in the water storage tank (1), a water outlet joint of the water pump (5) is communicated with the water inlet (3) through a pipeline, so as to pump water in the water storage tank (1) to the drinking tray (2) through the water pump (5), and water in the drinking tray (2) flows back into the water storage tank (1) through the water outlet (4). The pet water dispenser is compact in structure and enables a pet to drink water conveniently, and the drinking tray (2) is not easily overturned by the pet.

## Description

### TECHNICAL FIELD

Embodiments of the present disclosure relate to the technical field of animal water dispensers, and in particular, to a pet water dispenser and an anti-blocking water pump for a pet water dispenser.

### BACKGROUD

As people's living standards are continuously improving, keeping pets has become a fashion. Breeders pay more attention to the living standards of pets, especially in their eating and drinking water.

A conventional pet water dispenser includes a drinking basin and a water storage tank. The drinking basin is arranged on one side of the water storage tank and is in contact with the ground. The overall structure of the pet water dispenser is dispersed and not compact enough, making it inconvenient for pets to drink water. In addition, the drinking basin of the pet water dispenser is usually a container in a shape of a dish or a bowl, so that the drinking basin is easily overturned by pets.

Therefore, the problems in the prior art that the structure of the pet water dispenser is dispersed and the drinking basin is easily overturned by pets are important technical problems to be resolved by those skilled in the art.

### SUMMARY

An object of the present disclosure is to provide a pet water dispenser to resolve the technical problems in the prior art that the pet water dispenser has a dispersed structure and a drinking basin is easily overturned by pets. Many technical effects achieved by preferred technical solutions among many technical solutions according to the present disclosure are described in detail below.

An embodiment of the present disclosure provides a pet water dispenser, including a water storage tank, a drinking tray, and a water pump, where an upper end of the water storage tank is provided with an opening, the water storage tank is provided with a first supporting structure; the drinking tray covers an opening of the water storage tank and is supported by the first supporting structure, and the drinking tray is provided with a water inlet and a water outlet; the water pump is arranged in the water storage tank, a water outlet joint of the water pump is communicated with the water inlet through a pipeline, so as to pump water in the water storage tank to the drinking tray through the water pump, and water in the drinking tray flows back into the water storage tank through the water outlet.

In some embodiments of the present disclosure, the pet water dispenser further includes a first filter configured to filter out impurities in the water, where the first filter is arranged in the water storage tank and located below the water outlet, and the water in the drinking tray flowing out from the water outlet flows back into the water storage tank after being filtered by the first filter.

In some embodiments of the present disclosure, the pet water dispenser further includes a second supporting structure for supporting the first filter, where the second supporting structure is positioned below the water outlet.

In some embodiments of the present disclosure, the second supporting structure is provided with a cavity for accommodating the first filter, a plurality of through holes are formed side by side in an upper wall and a lower wall of the cavity, the water outlet is a strip-shaped opening arranged along an edge of the drinking tray, the plurality of through holes are located below the strip-shaped opening, and the arrangement direction of the plurality of through holes is consistent with the length direction of the strip-shaped opening.

In some embodiments of the present disclosure, the second supporting structure is connected to the drinking tray through a buckle structure.

In some embodiments of the present disclosure, the drinking tray is provided with a concave portion for accommodating water, and the water outlet is arranged at an edge position of the concave portion.

In some embodiments of the present disclosure, the height of the horizontal plane where the water inlet is located is greater than or equal to that of the horizontal plane where the water outlet is located.

In some embodiments of the present disclosure, the drinking tray is provided with a holding portion for being held by the human hand to open the opening of the water storage tank, and the holding portion protrudes from an upper surface of the drinking tray.

In some embodiments of the present disclosure, the pet water dispenser further includes a control device for controlling the water pump to be started or shut down, where the control device is arranged at the outer bottom of the water storage tank.

In some embodiments of the present disclosure, the pet water dispenser further includes a filtering device connected to the water pump, where the filtering device includes a housing and a second filter arranged in the housing, two ends of the housing are provided with a first opening and a second opening respectively, the first opening is communicated with a water inlet of the water pump, and the first opening of the housing is arranged on the periphery of the water pump in a sleeved mode and clamped with the periphery of the water pump.

In some embodiments of the present disclosure, the housing is provided with a notch, and the second filter is inserted into the housing through the notch.

In some embodiments of the present disclosure, the second opening is provided with a grid structure for coarse filtration.

In some embodiments of the present disclosure, the second filter is sponge.

In some embodiments of the present disclosure, the pet water dispenser further includes a shell for surrounding the water storage tank, where the bottom of the shell is provided with an anti-sliding pad, a side wall of the shell is provided with a strip-shaped hole, and a side wall of the water storage tank corresponding to the strip-shaped hole is made of a transparent material to facilitate observation of the water level in the water storage tank through the strip-shaped hole.

An embodiment of the present disclosure further provides an anti-blocking water pump for a pet water dispenser, including a housing for roughly filtering out impurities in water, where the housing is provided with a notch; a second filter which can be placed in a water flow channel of a pump body through the notch and is configured to filter out impurities in water that enters the pump body through the housing; and a water pump body, where the housing is buckled on the water pump body to form a water pump working cavity.

An embodiment of the present disclosure provides a pet water dispenser. A drinking tray is arranged on an opening at an upper end of a water storage tank, and provided with a water inlet and a water outlet. Water in the water storage tank is pumped, by using a water pump in the water storage tank, from the water inlet to the drinking tray for a pet to drink water. In addition, the water in the drinking tray can re-enter the water storage tank through the water outlet to form circulating water flow, so that the pet water dispenser is simple and compact in structure and clear at a glance, which makes the pet drink water conveniently and prevents the pet from overturning the drinking tray.

### BRIEF DESCRIPTION OF THE DRAWINGS

To describe the technical solutions in the embodiments of the present disclosure or in the prior art more clearly, the following briefly describes the accompanying drawings required for describing the embodiments or the prior art. Apparently, the accompanying drawings in the following description show some embodiments of the present disclosure, and a person of ordinary skill in the art may still derive other accompanying drawings from these accompanying drawings without creative efforts.
FIG. 1 is a cross-sectional view of a pet water dispenser according to an embodiment of the present disclosure;
FIG. 2 is a schematic structural diagram of a pet water dispenser according to an embodiment of the present disclosure;
FIG. 3 is a front view of a pet water dispenser according to an embodiment of the present disclosure;
FIG. 4 is a schematic structural diagram of a second supporting structure according to an embodiment of the present disclosure;
FIG. 5 is a schematic structural diagram of a water pump according to an embodiment of the present disclosure;
FIG. 6 is a schematic structural diagram of a filtering device according to an embodiment of the present disclosure; and
FIG. 7 is a schematic structural diagram of a water pump body portion of an anti-blocking water pump for a pet water dispenser according to an embodiment of the present disclosure.

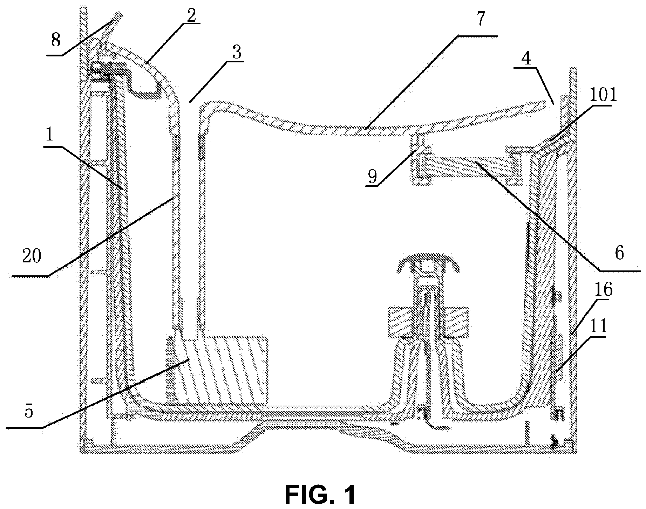

In FIGs. 1 to 7:

1. Water storage tank, 101. first supporting structure, 2. drinking tray, 3. water inlet, 4. water outlet, 5. water pump, 6. first filter, 7. concave portion, 8. holding portion, 9. second supporting structure, 10. through hole, 11. control device, 12. housing, 13. second filter, 14. notch, 15. grid structure, 16. shell, 17. anti-sliding pad, 18. strip-shaped hole, 19. anti-fouling structure, 20. pipeline.

### DESCRIPTION OF THE EMBODIMENTS

To make the object, technical solution and advantages of the present disclosure clearer, the following describes the technical solutions of the present disclosure in detail. Apparently, the described embodiments are merely some rather than all of the embodiments of the present disclosure. All other implementations obtained by a person of ordinary skill in the art based on the embodiments of the present disclosure without creative efforts shall fall within the protection scope of the present disclosure.

A conventional pet water dispenser not only has the problems that the whole structure is dispersed and not compact enough and a drinking basin is easily overturned by pets, but also has the problems that the water in a water storage tank becomes unclean and the water quality deteriorates after a long time.

An object of the embodiment is to provide a pet water dispenser to resolve the problems in the prior art that the pet water dispenser has a dispersed structure, the drinking basin is easily overturned by pets, and the water quality deteriorates after a long time.

Hereinafter, embodiments will be described with reference to the accompanying drawings. In addition, the embodiments shown below do not play any role in limiting the inventive content described in the claims. Besides, the structures represented by the following embodiments are not limited to those necessary for the solutions to the disclosure described in the claims.

Referring to FIG. 1, in this embodiment, a pet water dispenser includes a water storage tank 1, a drinking tray 2 and a water pump 5, where an upper end of the water storage tank 1 is provided with an opening, and the water storage tank 1 is further provided with a first supporting structure 101; and the drinking tray 2 covers the opening of the water storage tank 1, which is equivalent to being arranged on the first supporting structure 101 and supported by the first supporting structure 101. The drinking tray 2 is configured to accommodate water for drinking by a pet, and the first supporting structure 101 supports the drinking tray 2. The first supporting structure 101 can be set as an upper edge of the first supporting structure 101, that is, the drinking tray 2 can directly cover an upper end of the water storage tank 1. Preferably, as shown in FIG. 1, the first supporting structure 101 is a protrusion arranged on an inner wall of the water storage tank 1, and the drinking tray 2 is arranged at an upper end of the protrusion, which can further prevent the drinking tray 2 from moving. The pet drinks water on the drinking tray 2, and the drinking tray 2 is provided with a water inlet 3 and a water outlet 4. The water pump 5 is arranged in the water storage tank 1, a water outlet joint of the water pump 5 is communicated with the water inlet 3 through a pipeline 20, so as to pump water in the water storage tank 1 to the drinking tray 2 through the water pump 5. Water in the drinking tray 2 flows out of the drinking tray 2 through the water outlet 4 and flows into the water storage tank 1.

An embodiment of the present disclosure provides a pet water dispenser. A drinking tray is arranged on an opening at an upper end of a water storage tank, and provided with a water inlet and a water outlet. Water in the water storage tank is pumped, by using a water pump in the water storage tank, from the water inlet to the drinking tray for a pet to drink water. In addition, the water in the drinking tray can re-enter the water storage tank through the water outlet to form circulating water flow, so that the pet water dispenser is simple and compact in structure and clear at a glance, which makes the pet drink water conveniently and prevents the pet from overturning the drinking tray.

According to an embodiment of the present disclosure, the pet water dispenser further includes a first filter 6 for filtering out impurities in water. The first filter 6 is arranged in the water storage tank 1 and located below the water outlet 4, and thus water in the drinking tray 2 flowing out from the water outlet 4 flows back into the water storage tank 1 after being filtered by the first filter 6. The first filter 6 can be connected to a side wall of the water storage tank 1, or can be connected to the bottom of the drinking tray 2, as long as it is located below the water outlet 4. In a preferred embodiment, the first filter 6 is a filter element.

As such, after the water pump 5 is started, the water in the water storage tank 1 enters the drinking tray 2 from a water outlet joint of the water pump 5 through the water inlet 3, so as to enable the pet to drink water; in addition, the water in the drinking tray 2 flows out through the water outlet 4 of the drinking tray 2, is filtered by the first filter 6 and then re-enters the water storage tank 1. Through circulation in this way, the first filter 6 can filter out impurities in the water, to ensure that the quality of water in the drinking tray 2 and the water storage tank 1, delay the deterioration of water quality, and improve the taste of pets' drinking water. In addition, the drinking tray 2 is arranged at an upper end of the water storage tank 1, so that the pet does not overturn the drinking tray 2, and it is convenient to drink water. A whole water circulation system is simple and compact in structure and clear at a glance.

In an optional embodiment, the drinking tray 2 is provided with a concave portion 7 for accommodating water. As shown in FIG. 1, the water outlet 4 is arranged at an edge position of the concave portion 7. In this way, when the concave portion 7 is filled with water, spilled water flows into the water storage tank 1 through the water outlet 4. Preferably, the surface of the concave portion 7 is a cambered surface. In other embodiments, the water outlet 4 is arranged at the bottom of the concave portion 7, namely, the lowest position of the concave portion 7, and the water outlet 4 is provided with a valve for controlling whether to allow water to flow through. When a pet needs to drink water, the valve of the water outlet 4 is switched off to make the concave portion 7 filled with water. When the pet has drunk water or does not drink water, the valve of the water outlet 4 is switched on, so that the water in the concave portion 7 flows into the water storage tank 1 through the water outlet 4.

In an optional embodiment, the height of one of two opposite ends of the drinking tray 2 is greater than that of the other end, that is, the drinking tray 2 is in an inclined state.

When a pet needs to drink water, the pet extends its head from the lower end of the drinking tray 2 to drink water. Compared with a horizontal state of the drinking tray 2, this arrangement is more suitable for the pet's drinking posture, and it is more convenient for the pet to drink water. In addition, to a certain extent, it prevents hair at the pet's mouth from being in contact with the water in the drinking tray 2.

In an embodiment, the height of the horizontal plane where the water inlet 3 is located is greater than or equal to that of the horizontal plane where the water outlet 4 is located.

In an optional embodiment, as shown in FIG. 1 to FIG. 3, the drinking tray 2 is provided with a holding portion 8 for being held by the human hand to open the opening of the water storage tank 1, and the holding portion 8 protrudes from an upper surface of the drinking tray 2; that is, the holding portion 8 has a raised structure, and the holding portion 8 may be in various shapes. In a preferred embodiment, the holding portion 8 is arranged near the water inlet 3.

As such, when water needs to be added to the water storage tank 1, the holding portion 8 can be held by the human hand, and the drinking tray 2 is opened to be separate from the upper end of the water storage tank 1, so that the opening of the water storage tank 1 can be opened, and water is added through the opening of the water storage tank 1, making the water adding process more convenient and faster.

In an optional embodiment, the pet water dispenser further includes a second supporting structure 9 for supporting the first filter 6; the second supporting structure 9 may be connected to the bottom end of the drinking tray 2, or may be connected to the side wall of the water storage tank 1. In short, the second supporting structure 9 is located below the water outlet 4, and the first filter 6 supported by the second supporting structure 9 is also located below the water outlet 4. In a preferred embodiment, the second supporting structure 9 is a filter element tray.

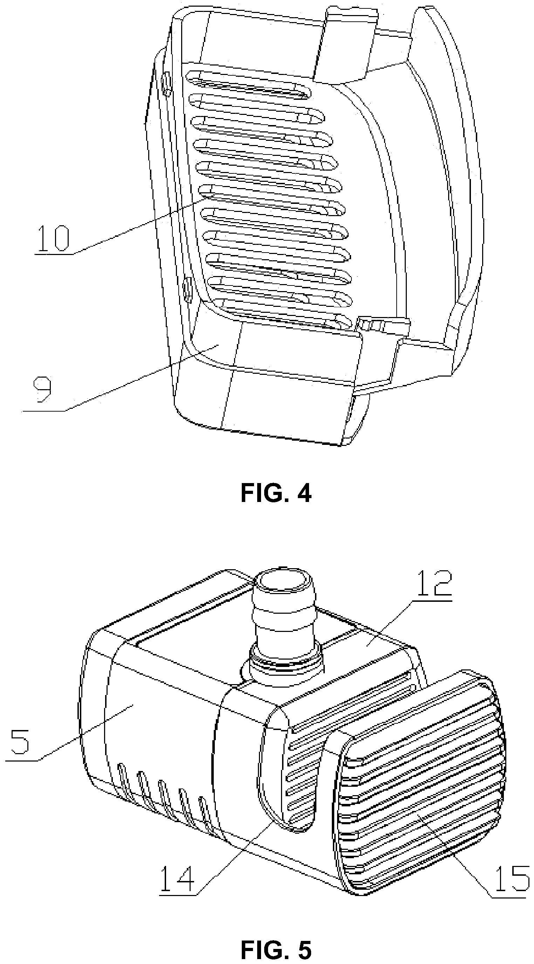

In an embodiment, as shown in FIG. 4, the second supporting structure 9 is provided with a cavity for accommodating the first filter 6, a plurality of through holes 10 are formed side by side in an upper wall and a lower wall of the cavity, the water outlet 4 is a strip-shaped opening arranged along an edge of the drinking tray 2, each of the through holes 10 is located below the strip-shaped opening, and the arrangement direction of the through holes 10 is consistent with the length direction of the strip-shaped opening. The water flowing out of the water outlet 4 sequentially passes through the through holes 10 in the upper wall of the cavity, is filtered by the first filter 6, passes through the through holes 10 in the lower wall of the cavity, and finally flows into the water storage tank 1.

As such, the first filter 6 is provided with a complete accommodating space by using the second supporting structure 9, so that the first filter 6 is horizontally arranged without changing its position, and it is ensured that water is filtered by the first filter 6 when flowing out of the water outlet 4.

In a preferred embodiment, the second supporting structure 9 is connected to the drinking tray 2 through a buckle structure. Specifically, a side wall of the second supporting structure 9 is provided with a protrusion, a bottom surface of the drinking tray 2 is connected to a vertical plate, and a side wall of the vertical plate is provided with a groove with the same size and structure as the protrusion; when the protrusion extends into the groove, the second supporting structure 9 is connected to the drinking tray 2; and when the protrusion is separated out the groove, the second supporting structure 9 is separated from the drinking tray 2. Preferably, as shown in FIG. 1, the first supporting structure 101 is an inclined supporting rib plate arranged on the inner wall of the water storage tank 1, and the second supporting structure 9, namely the tray, is arranged on the supporting rib plate, and the tray is connected to the drinking tray 2 through a buckle structure, that is, the drinking tray 2 is indirectly arranged on the supporting rib plate through the tray, and the drinking tray 2 also covers the opening of the water storage tank 1 by using the supporting rib plate.

As such, the second supporting structure 9 is detachably connected to drinking tray 2 through the buckle structure, making the structure simple and the connection convenient. In addition, when water is added into the water storage tank 1, the second supporting structure 9 is connected to the drinking tray 2, so that when the drinking tray 2 is opened, the drinking tray 2 drives the second supporting structure 9 to move together, and thus the second supporting structure 9 is always located below the water outlet 4, thereby avoiding the situation that the water flowing out of the water outlet 4 cannot be filtered because the second supporting structure 9 is separated from the position below the water outlet 4.

In an optional embodiment, as shown in FIG. 1, the pet water dispenser further includes a control device 11, where the control device 11 is configured to control the water pump 5 to be started or shut down. The control device 11 is arranged at the outer bottom of the water storage tank 1, that is, the control device 11 is arranged on the outer wall of the water storage tank 1 and close to the bottom end.

As such, the control device 11 is designed outside the water storage tank 1, which does not occupy the internal space of the water storage tank 1, so that the water storage tank 1 can contain as much water as possible.

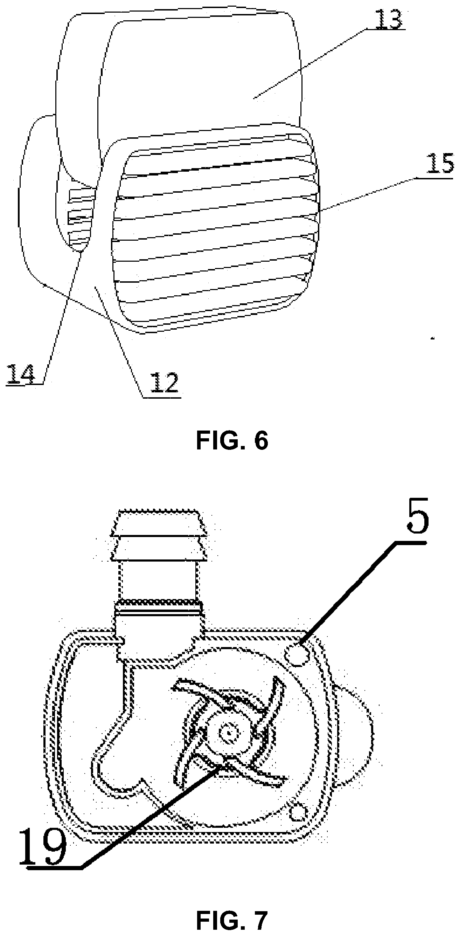

In an optional embodiment, as shown in FIG. 5 and FIG. 6, the pet water dispenser further includes a filtering device connected to the water pump 5, where the filtering device can be clamped with the outer surface of the water pump 5 or can adhere to the water pump 5. The filtering device includes a housing 12 and a second filter 13 arranged in the housing 12, where two ends of the housing 12 are provided with a first opening and a second opening respectively, and the first opening of the housing 12 is communicated with a water inlet of the water pump 5; water in the water storage tank 1 sequentially passes through the second opening and the first opening of the housing 12 and then enters the water pump 5, and water in the water storage tank 1 is filtered by the second filter 13 when entering the housing 12.

As such, the second filter 13 in the filtering device can filter out impurities in the water, and further filter the water that is about to enter the water pump 5, so that the water entering the water pump 5 is cleaner, and thus the water pumped to the drinking tray 2 is also cleaner. In addition, the filtering device filters out impurities in water, which can prevent the impurities from blocking the water pump 5 and reducing the working efficiency of the water pump 5.

Preferably, the first opening of the housing 12 is arranged on the periphery of the water pump 5 in a sleeved mode and clamped with the periphery of the water pump 5.

As such, the connection and disassembly between the housing 12 and the water pump 5 are relatively simple and convenient.

In an optional embodiment, the housing 12 is provided with a notch 14, and the second filter 13 is inserted into the housing 12 through the notch 14. In a preferred embodiment, the notch 14 is in a shape of a U-shaped groove, and the outer surface of the second filter 13 matches the edge of the U-shaped groove; that is, the shape of the second filter 13 can be similar to or the same as that of the notch 14, so that the second filter 13 matches the notch 14 more appropriately.

As such, water passing through the housing 12 is filtered by the second filter 13, thereby improving the filtering efficiency.

In an optional embodiment, the second opening is provided with a grid structure 15 for coarse filtration.

As such, the water entering the filtering device is coarsely filtered through the grid structure 15, so that impurities with a larger size can be filtered out.

In a preferred embodiment, as shown in FIG. 6, the second filter 13 is sponge.

Holes in the sponge are small, so that the impurities with a small size can be filtered out, and impurities in water can be filtered out to a greater extent. In addition, the sponge has better water permeability, and thus water can easily enter the water pump 5 through the sponge.

In other embodiments, when the filtering device has a greater length, the edge of the first opening needs to be provided with a notch that has a cambered structure, and the notch matches the outer surface of a water outlet joint of a water pump 5 body, so as to avoid the situation that when the filtering device has a larger length, the filtering device cannot be connected to the water pump 5 because the first opening is blocked by the water outlet joint.

In an optional embodiment, as shown in FIG. 1 to FIG. 3, the pet water dispenser further includes a shell 16 for surrounding the water storage tank 1.

As such, the shell 16 can protect the water storage tank 1 to a certain extent, and prevent external destructive force from damaging the water storage tank 1.

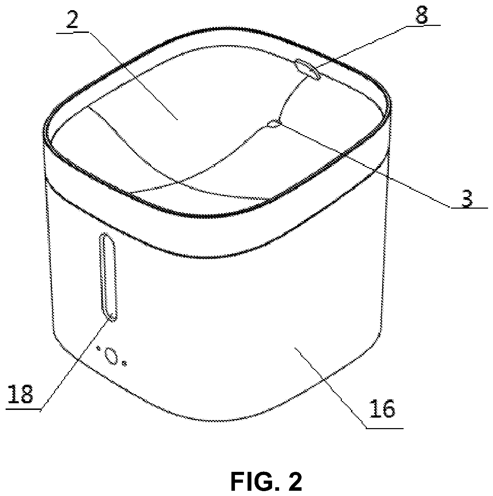

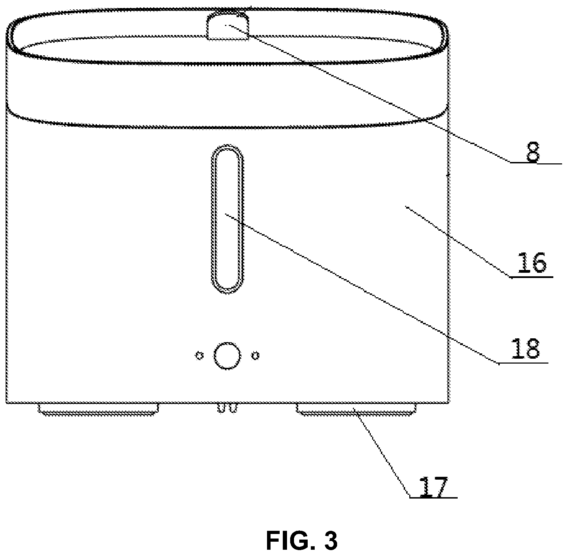

Specifically, as shown in FIG. 2 and FIG. 3, the bottom of the shell 16 is provided with an anti-sliding pad 17, and the side wall of the shell 16 is provided with a strip-shaped hole 18 that is vertically formed. The side wall of the water storage tank 1 corresponding to the strip-shaped hole 18 is made of a transparent material, or the whole water storage tank 1 is made of a transparent material, so that the water level in the water storage tank 1 can be observed through the strip-shaped hole 18. In other embodiments, the shell 16 is further provided with a button corresponding to and connected to the control device 11, and the control device is controlled by the button to indirectly control the water pump 5 to be started or shut down.

As such, the anti-sliding pad 17 is arranged at the bottom end of the shell 16 to play an anti-sliding role. A user can observe the water level in the water storage tank 1 through the strip-shaped hole 18, know the remaining water quantity in the water storage tank 1, and determine, based on the remaining water quantity, whether water needs to be added.

The pet water dispenser is specifically described by combining the above embodiments. In this embodiment, the pet water dispenser includes a water storage tank 1, a drinking tray 2, a water pump 5, a filter element, and a tray, where an upper end of the water storage tank 1 is provided with an opening, and the water storage tank 1 is further provided with a first supporting structure 101; the drinking tray 2 covers an opening of the water storage tank 1 and is supported by the first supporting structure 101; the drinking tray 2 covers the opening of the water storage tank 1 and is provided with a water inlet 3 and a concave portion 7 for accommodating water, and a water outlet 4 is arranged at an edge position of the concave portion 7; the water pump 5 is arranged in the water storage tank 1, and a water outlet joint of the water pump 5 is communicated with the water inlet 3 through a pipeline, so as to pump water in the water storage tank 1 to the drinking tray 2 through the water pump 5; the filter element is arranged in the water storage tank 1 and located below the water outlet 4, and water in the drinking tray 2 flowing out of the water outlet 4 flows back into the water storage tank 1 after being filtered by the filter element; the tray is located below the water outlet 4 and provided with a cavity for accommodating the filter element; a plurality of through holes 10 are formed side by side in an upper wall and a lower wall of the cavity, the water outlet 4 is a strip-shaped opening arranged along an edge of the drinking tray 2, each of the through holes 10 is located below the strip-shaped opening, and the arrangement direction of the through holes 10 is consistent with the length direction of the strip-shaped opening. The height of one of two opposite ends of the drinking tray 2 is greater than that of the other end; the drinking tray 2 is provided with a holding portion 8 for being held by the human hand to open the opening of the water storage tank 1, and the holding portion 8 protrudes from an upper surface of the drinking tray 2. The pet water dispenser further includes a control device 11 for controlling the water pump 5 to be started or shut down, where the control device 11 is arranged at the outer bottom of the water storage tank 1. The pet water dispenser further includes a filtering device connected to the water pump 5, where the filtering device includes a housing 12 and sponge arranged in the housing 12, the housing 12 is provided with a notch 14, the sponge is inserted in the housing 12 through the notch 14, two ends of the housing 12 are provided with a first opening and a second opening respectively, and the first opening is communicated with a water inlet of the water pump 5; the first opening is arranged on the periphery of the water pump 5 in a sleeved mode and clamped with the periphery of the water pump 5, and the second opening is provided with a grid structure 15 for coarse filtration. The pet water dispenser further includes a shell 16 for surrounding the water storage tank 1, where the bottom of the shell 16 is provided with an anti-sliding pad 17,

a side wall of the shell 16 is provided with a strip-shaped hole 18, and a side wall of the water storage tank 1 corresponding to the strip-shaped hole 18 is made of a transparent material to facilitate observation of the water level in the water storage tank 1 through the strip-shaped hole 18.

As such, the filter element and the filtering device can filter out impurities in water, ensure the quality of water in the drinking tray 2 and the water storage tank 1, delay the deterioration of water quality, and improve the taste of pets' drinking water. In addition, the drinking tray 2 is arranged at an upper end of the water storage tank 1, so that the pet does not overturn the drinking tray 2. A whole water circulation system is simple and compact in structure and clear at a glance.

A pet water dispenser according to another embodiment of the present disclosure includes a water storage tank 1, a drinking tray 2, a filter element 6, a filter element tray 9, a water pump 5, a water pumping pipeline 20, and a control device 11, where an upper surface of the drinking tray 2 is concave, the drinking tray 2 is provided with a water inlet 3, and a water outlet 4 is arranged at a non-concave position of the upper surface of the drinking tray 2; the filter element tray 9 is arranged below the drinking tray 2 and just below the water outlet 4, the drinking tray 2 and the filter element tray 9 form a cavity structure, the filter element 6 is arranged in the cavity formed by the drinking tray 2 and the filter element tray 9, and the filter element tray 9 is provided with a water outlet hole; a lower port of the water pumping pipeline 20 is located at the inner bottom of the water storage tank 1, and an upper port of the water pumping pipeline 20 is in sealing connection with the water inlet 3 of the drinking tray 2; a water outlet of the water pump 5 is directly connected to a water inlet of the water pumping pipeline 20, and the water pump 5 is located under the water pumping pipeline 20; and the control device 11 is arranged at the outer bottom of the water storage tank 1.

In a more preferred solution, small water outlet holes formed in the non-concave position of the upper surface of the drinking tray 2 are located at the edge of the drinking tray 2.

The control device 11 is configured to control the water pump 5 to be started or shut down, which pertains to the prior art and is not described in detail.

Working principle description: The water pump transfers the water at the inner bottom of the water storage tank to the drinking tray through the water pumping pipeline; as more and more water is transported to the concave position of the drinking tray, the water in the drinking tray slowly passes through the water outlet arranged at the non-concave position and flows into the cavity formed by the drinking tray and the filter element tray; because the filter element is arranged in the cavity, it can be ensured that the water flowing downward is filtered by the filter element, and the water filtered by the filter element flows into the bottom of the water storage tank through the water outlet hole of the filter element tray. As such, a complete cycle is formed, and is continuously performed to enable water in the drinking tray to be always in a flowing state.

In the pet water dispenser according to the embodiment of the present disclosure, the filter element tray is arranged below the drinking tray and just below the water outlet, so that the drinking tray and the filter element tray form a cavity structure. Such an integrated design makes the water filtration more efficient and makes it easier to operate each time the water is replaced. In addition, the water outlet of the water pump is directly connected to the water inlet of the water pumping pipeline, and the water pump is located under the water pumping pipeline. Such a design can greatly save the space of the water storage tank and the product production and assembly process becomes more efficient.

An embodiment of the present disclosure further provides an anti-blocking water pump for a pet water dispenser. The filtration technology for water pump in the prior art is relatively poor, which easily causes blockage inside the water pump, or foreign matter is wound around fan blades of the water pump, which affects the working efficiency and working quality of the water pump. The applicant found that the prior art has at least the following technical problems: A water pump filtration system in the prior art has a grid structure outside the water pump, but the grid structure has relatively large gaps, so that the overall filtering effect is relatively poor and falls behind, and it is impossible to filter out small impurities and pet hair impurities in the water, which not only affects the water quality, but also blocks the water pump when the impurities enter the water pump, thereby reducing the working efficiency of the water pump.

The anti-blocking water pump for a pet water dispenser according to the embodiment of the present disclosure is described in detail below with reference to FIGs. 5 to 7.

Referring to FIGs. 5 and 6, an embodiment of the present disclosure provides an anti-blocking water pump for a pet water dispenser, including a housing 12 used for coarse filtration of impurities in water and provided with a notch 14; a second filter 13 which can be placed in a water flow channel of a pump body through the notch 14 and is configured to filter out impurities in the water entering the pump body through the housing 12; and a water pump body (namely a body portion of the water pump 5), where the housing 12 is buckled on the water pump body to form a water pump working cavity.

The embodiment of the present disclosure provides the anti-blocking water pump for pet water dispenser. The housing and the second filter are provided, such that before entering the water pump, water first passes through the housing for coarse filtration and then passes through the second filter for fine filtration. Therefore, impurities in the water can be prevented from entering the water pump and causing the blockage of the water pump, thereby ensuring the stability of the working efficiency of the water pump.

According to an embodiment of the present disclosure, the second filter 13 is arranged in the notch 14.

Specifically, the second filter 13 is closely attached to an inner wall of the notch 14, so that water can only pass through the side with the second filter, thereby improving the filtration efficiency.

According to an embodiment of the present disclosure, one side of the housing 12 away from the water pump body is provided with the grid structure 15.

As such, the water entering the anti-blocking water pump is coarsely filtered through the grid structure 15, so that impurities with a larger size can be filtered out.

According to an embodiment of the present disclosure, the notch 14 is in a shape of a U-shaped groove.

Specifically, the U-shaped notch can allow the second filter 13 to be easily inserted or removed, which is convenient and quick.

According to an embodiment of the present disclosure, the shape of the second filter 13 matches the shape of the notch 14.

Specifically, the notch 14 is in a shape of a U-shaped groove, and the outer surface of the second filter 13 matches the edge of the U-shaped groove; that is, the shape of the second filter 13 can be similar to or the same as that of the notch 14, so that the second filter 13 matches the notch 14 more appropriately.

As such, water passing through the housing 12 is filtered by the second filter 13, thereby improving the filtering efficiency.

According to an embodiment of the present disclosure, the second filter 13 is sponge.

Holes in the sponge are small, so that impurities with a small size can be filtered out, and impurities in water can be filtered out to a greater extent. In addition, the sponge has good water permeability, and water easily enters the water pump body through the sponge.

According to an embodiment of the present disclosure, one end of the housing 12 close to the water pump body is provided with a notch.

Specifically, the housing 12 can better match the water pump body through the notch.

According to an embodiment of the present disclosure, as shown in FIG. 7, the center of an end of each fan blade of the water pump body is provided with an anti-fouling structure 19, and the anti-fouling structure 19 fills gaps between a plurality of fan blades.

The anti-fouling structure 19 is installed at the center of the fan blade of the water pump body, so that no impurities are accumulated inside the water pump body when the water pump body is working, which can achieve a double anti-blocking effect.

According to an embodiment of the present disclosure, the anti-fouling structure 19 is integrally formed with the fan blade.

The integral forming of the anti-fouling structure 19 and the fan blade enables the anti-fouling structure 19 to better match the fan blade, thereby achieving a better anti-fouling effect.

According to the embodiment of the present disclosure, impurities in water can be better filtered out through the housing and the second filter, to protect the water pump body from blockage; in addition, the anti-fouling structure arranged at the center of the fan blade of the water pump body also protects the water pump body from blockage.

It can be understood that for same or similar parts in the above embodiments, references can be made to each other, and for content not described in detail in some embodiments, references can be made to same or similar content in other embodiments. A plurality of solutions according to the present disclosure include their own basic solutions, which are independent of each other and do not restrict each other, but they may be combined with each other provided that no conflict occurs, so as to achieve multiple effects together.

The foregoing descriptions are only specific implementations of the present disclosure, but the protection scope of the present disclosure is not limited thereto. Any person skilled in art can easily conceive of variations or replacements within the technical scope disclosed in the present disclosure, and the variations or replacements should fall within the protection scope of the present disclosure. Therefore, the protection scope of the present disclosure should be subject to the claims.

## Claims

1. A pet water dispenser, comprising:
a water storage tank (1) with an upper end provided with an opening, wherein the water storage tank (1) is provided with a first supporting structure (101);
a drinking tray (2) covering the opening of the water storage tank (1) and supported by the first supporting structure (101), wherein the drinking tray (2) is provided with a water inlet (3) and a water outlet (4); and
a water pump (5) arranged in the water storage tank (1), wherein a water outlet joint of the water pump (5) is communicated with the water inlet (3) through a pipeline, so as to pump water in the water storage tank (1) to the drinking tray (2) through the water pump (5), and water in the drinking tray (2) flows back into the water storage tank (1) through the water outlet (4).

2. The pet water dispenser according to claim 1, further comprising:
a first filter (6) configured to filter out impurities in the water, wherein the first filter (6) is arranged in the water storage tank (1) and located below the water outlet (4), and the water in the drinking tray (2) flowing out from the water outlet (4) flows back into the water storage tank (1) after being filtered by the first filter (6).

3. The pet water dispenser according to claim 2, further comprising a second supporting structure (9) configured to support the first filter (6), wherein the second supporting structure (9) is located below the water outlet (4).

4. The pet water dispenser according to claim 3, wherein the second supporting structure (9) is provided with a cavity for accommodating the first filter (6), a plurality of through holes (10) are formed side by side in an upper wall and a lower wall of the cavity, the water outlet (4) is a strip-shaped opening arranged along an edge of the drinking tray (2), the plurality of through holes (10) are located below the strip-shaped opening, and the arrangement direction of the plurality of through holes (10) is consistent with the length direction of the strip-shaped opening.

5. The pet water dispenser according to claim 3 or 4, wherein the second supporting structure (9) is connected to the drinking tray (2) through a buckle structure.

6. The pet water dispenser according to any one of claims 1 to 5, wherein the drinking tray (2) is provided with a concave portion (7) for accommodating water, and the water outlet (4) is arranged at an edge position of the concave portion (7).

7. The pet water dispenser according to any one of claims 1 to 6, wherein the height of the horizontal plane where the water inlet (3) is located is greater than or equal to that of the horizontal plane where the water outlet (4) is located.

8. The pet water dispenser according to any one of claims 1 to 7, wherein the drinking tray (2) is provided with a holding portion (8) for being held by the human hand to open the opening of the water storage tank (1), and the holding portion (8) protrudes from an upper surface of the drinking tray (2).

9. The pet water dispenser according to any one of claims 1 to 8, further comprising a control device (11) for controlling the water pump (5) to be started or shut down, wherein the control device (11) is arranged at the outer bottom of the water storage tank (1).

10. The pet water dispenser according to any one of claims 1 to 9, further comprising a filtering device connected to the water pump (5), wherein the filtering device comprises a housing (12) and a second filter (13) arranged in the housing (12), two ends of the housing (12) are provided with a first opening and a second opening respectively, the first opening is communicated with a water inlet of the water pump (5), and the first opening of the housing (12) is arranged on the periphery of the water pump (5) in a sleeved mode and clamped with the periphery of the water pump (5).

11. The pet water dispenser according to claim 10, wherein the housing (12) is provided with a notch (14), and the second filter (13) is inserted into the housing (12) through the notch (14).

12. The pet water dispenser according to claim 10 or 11, wherein the second opening is provided with a grid structure (15) for coarse filtration.

13. The pet water dispenser according to any one of claims 10 to 12, wherein the second filter (13) is sponge.

14. The pet water dispenser according to any one of claims 1 to 13, further comprising a shell (16) for surrounding the water storage tank (1), wherein the bottom of the shell (16) is provided with an anti-sliding pad (17), a side wall of the shell (16) is provided with a strip-shaped hole (18), and a side wall of the water storage tank (1) corresponding to the strip-shaped hole (18) is made of a transparent material to facilitate observation of the water level in the water storage tank (1) through the strip-shaped hole (18).

15. An anti-blocking water pump for a pet water dispenser, comprising:
a housing (12) for roughly filtering out impurities in water, wherein the housing (12) is provided with a notch (14);
a second filter (13) which can be placed in a water flow channel of a pump body through the notch (14) and is configured to filter out impurities in water that enters the pump body through the housing (12); and
a water pump body, wherein the housing (12) is buckled on the water pump body to form a water pump working cavity.
